# EUROPEAN PATENT SPECIFICATION

(11) **EP 1 873 993 B1**
(45) Date of publication and mention of the grant of the patent: **18.01.2012**
(21) Application number: 07016296.1
(22) Date of filing: 01.03.2004
(51) Int. Cl.: H04L 29/06, H04L 29/08, H04L 12/24, G06F 21/00

(54) **Command processing system**
Befehlsverarbeitungssystem
Système de traitement des commandes

(43) Date of publication of application: 02.01.2008
(62) Divisional of application: 04004722.7
(73) Proprietor: Hitachi, Ltd., Chiyoda-ku Tokyo 100-8280 (JP)
(72) Inventor: Fujita, Takahiro, Chiyoda-ku Tokyo 100-8220 (JP); Kaneda, Yasunori, Chiyoda-ku Tokyo 100-8220 (JP)
(74) Representative: Strehl Schübel-Hopf & Partner

(56) References cited:
- EP-A- 0 898 216
- EP-A- 1 255 179
- US-A1- 2003 115 447
- US-B1- 6 226 749

## Description

### Background of the invention

The present invention relates to a method for managing a computer system in a storage area network environment by means of a management agent.

One of the most common schemes for managing a computer system is to have a management application and a management agent so arranged that the latter provides the former with a management interface for operating its constituent devices. Thanks to recent advances in the Web technology, use of XML messages is becoming increasingly popular as a means of communication between the management application and the management agent. This kind of arrangement allows the management application to utilize remotely located management agents via the Web (or an ordinary IP network), thereby facilitating centralized management.

In such an arrangement, the management agent employs user authentication to prevent the settings of the computer system or its constituent devices from being altered by users other than the system administrator. If no security measures such as authentication are employed, a malicious user (cracker) might be able to crack into the system by stealing the system administrator's identity and altering messages during transmission. This might cause the management agent to falsely modify the settings of a device, thereby resulting in a system down.

In typical conventional arrangements of this sort, the only mechanisms to prevent unauthorized execution of commands on the system's constituent devices have been cryptography, such as a cipher system applied to the communication path between the management application and the management agent, and user authentication. Since cryptography in itself does not control the executability of commands on the target device, if it is broken on the communication path the cracker who has also managed to disguise himself/herself as an authorized user would be able to have any commands executed on the target device.

If for tighter security the management agent were to always demand a sufficiently secure communication path and a sufficiently secure authentication method, then it would become necessary to provide them even for those management applications which do not require such a tight security level. This would limit the management applications that the system administrator can use.

US 2003/115447 A1 discloses a network media access controller operating as a centralised control point for managing secure data storage in a network-attached data storage subsystem.

### Summary of the invention

It is an object of the present invention to provide a means for ensuring high security in the management of a computer system by preventing a malicious and unauthorized intruder from executing potent commands that can cause a significant disruption or down of a computer system, without unreasonably limiting the use of the management application by the system administrator.

In a preferred embodiment of the present invention, an ad hoc program is introduced which runs on a storage subsystem and which, upon receiving a management command from a system management computer, determines whether it should be executed or rejected, judging from the security level of the communication path from/to the system management computer and the security level required for the execution of the command.

The present invention is defined in the independent claims. Further advantageous features are set out in the dependent claims.

### Brief description of the drawings

Figure 1 illustrates the configuration of a computer system according to the preferred embodiment of the present invention.
Figure 2 shows an example of the procedures for establishing a ciphered communication path between the management application and the management agent.
Figure 3 shows an example of the layout and contents of four tables (A through D): the security level specification table (A), the required security level table (B), the history table (C), and the security level uplift table (D).
Figure 4 is a flowchart showing the process of how the management agent handles device commands.
Figure 5 is a sample of the table listing SSL3 cipher algorithms.

### Description of the preferred embodiment

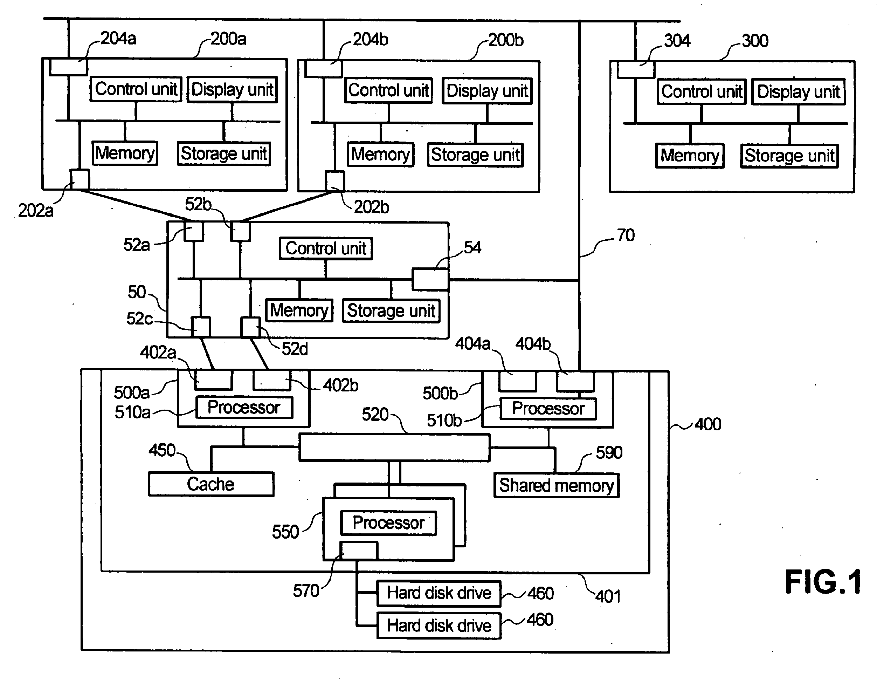

Figure 1 illustrates the configuration of a computer system according to the preferred embodiment of the present invention. A computer system 1 comprises a computer 200a, another computer 200b (these two may also be collectively called a computer 200), a management computer 300, a fiber channel switch 50, an Internet Protocol (hereinafter abbreviated to IP) network 70, and a storage subsystem 400.

The storage subsystem 400 is connected to the computers 200a and 200b through the fiber channel switch 50 and also to the management computer 300 through the IP network 70.

The SCSI Protocol over Fiber Channel (hereinafter abbreviated to FCP) is used for data transmission between the computer 200a or 200b and the storage subsystem 400.

The fiber channel switch 50 comprises a control unit, a memory, a storage unit, interface units 52a, 52b, 52c, and 52d for communication with the storage subsystem 400, and an interface unit 54 for communication with the IP network 70.

The storage subsystem 400 comprises a control unit 401 and one or more hard disk drives 460. The control unit 401 further comprises a channel adapter 500a and another channel adapter 500b (these two may also be collectively called a channel adapter 500), a cache memory 450, a shared memory 590, one or more disk adapters 550, and a crossbar switch 520. The crossbar switch 520 interconnects the channel adapter 500, the cache memory 450, the shared memory 590, and the disk adapters 550. As an alternative, a bus can be used instead of the crossbar switch 520.

A string of hard disk drives 460 are connected to each disk adapter 550 through a port 570.

The channel adapter 500a has a processor 510a and fiber channel ports 402a and 402b, through which it receives FCP-based I/O requests issued by computers 200a and 200b, respectively.

The channel adapter 500b has a processor 510b and IP network ports 404a and 404b. The channel adapter 500b communicates with the management computer 300 through the IP network port 404b.

The storage subsystem 400 contains one or more logical volumes, each having a logical storage area. Each logical volume corresponds to part or all of the physical storage area that is made up of a string of hard disk drives 460. A logical volume corresponds to a storage area accessible by the computer 200 and is given a unique identification within the computer system 1. The computer 200 issues I/O commands based on FCP against a logical volume.

The disk adapter 550 transfers data between the string of disk drives 460 connected to it, the cache memory 450, and the channel adapter 500. It also controls the cache memory 450 and the channel adapter 500. For example, it can control the string of disk drives 460 connected to it as a redundant array of inexpensive disks (RAID), thereby enhancing the reliability and performance of the storage subsystem 400.

To compensate for the low rate of data transfer between the hard disk drives 460 and the channel adapter 500, the storage subsystem 400 holds frequently accessed data in the cache memory 450.

The computer 200a comprises not only a control unit, a memory, a storage unit, and a display unit, just like any other computers, but also an interface unit 202a for connection with the fiber channel switch 50 and an interface unit 204a for connection with the network 70. The computer 200b has a similar configuration.

The management computer 300 comprises not only a control unit, a memory, a storage unit, and a display unit, just like any other computers, but also an interface unit 304 for connection with the network 70. By loading the management application stored in its storage unit into the memory and executing it, the management computer 300 controls the storage subsystem 400 through the network 70 to which the storage subsystem 400 is also connected. The management computer 300 also communicates with the computer 200 and the fiber channel switch 50 through the network 70.

Running on the processor 510b, which is part of the channel adapter 500b, is a special program (management agent) for communicating with the management computer 300. It receives setup and control commands from the management application running on the management computer 300, and by executing them, sets up and controls the storage subsystem 400.

The management agent runs not only on the storage subsystem 400 but also on the fiber channel switch 50 and the computer 200. Thus, the management application running on the management computer 300 can obtain the status of, and modify the settings of, the fiber channel 50 as well as the computer 200 through the management agent running on them.

The communication between the management application, which runs on the management computer 300, and the management agent, which runs on the channel adapter 500, is based on the Hyper Text Transfer Protocol (HTTP), by which messages written in extensible Markup Language (XML) are exchanged between the two.

For security reasons, i.e., to prevent eavesdropping, ID theft, and unauthorized modification of messages, the communication between the management application and the management agent employs cipher based on the secure sockets layer (SSL) protocol. The SSL protocol, which operates on the TCP/IP protocol, operates underneath higher level protocols such as HTTP (application layer) and enhances the security level of the communication path. SSL's handshaking protocol first determines the cipher algorithm and then establishes a secure communication path.

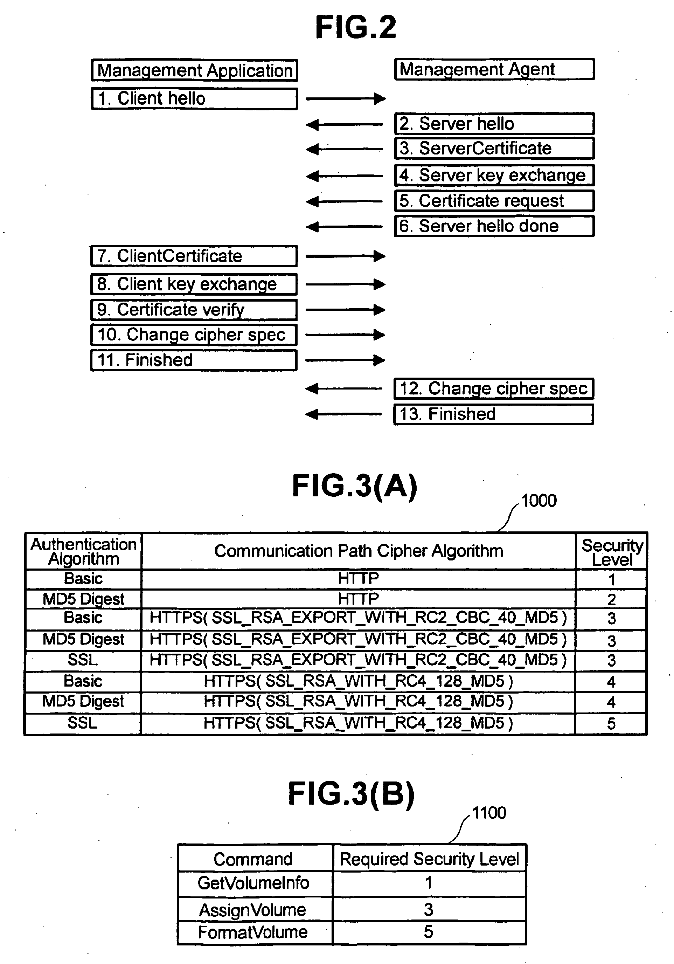

Figure 2 describes the procedures for establishing a ciphered communication path using the SSL handshaking protocol between the management application and the management agent, taking SSL3 as an example.

First, the management application (SSL client) sends "Client Hello" to the management agent (SSL server) (step 1: Client Hello) together with a list of the cipher algorithms supported by the management application and, in the case of resumption of an existing session, the session ID. The list is prioritized according to the order desired by the management application. The management application then waits for "Server Hello."

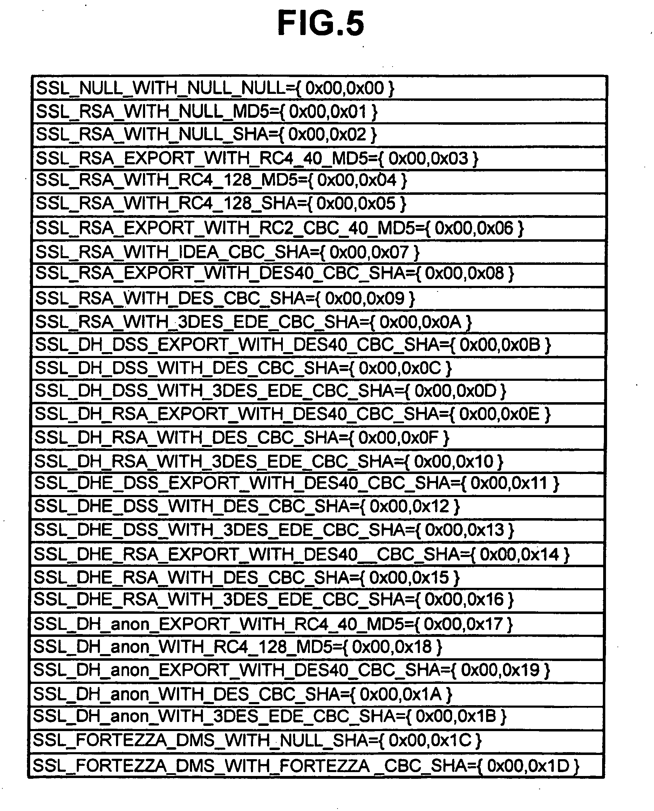

Figure 5 is an example of a list of cipher algorithms. For each cipher algorithm, a two-byte ID is assigned.

The management agent selects one from the list of cipher algorithms sent by the management application and generates a session ID, and then sends "Server Hello" to the management application together with the decision on the cipher algorithm and the session ID (step 2: Server Hello). The management application saves this session ID for later communications, so that by including it in "Client Hello" the management application can, without going through the handshaking protocol, establish a ciphered communication path.

The procedures for selecting one cipher algorithm are as follows: The management agent, which holds a list of cipher algorithms supported by it, goes through the list of cipher algorithms sent from the management application in descending order of priority and checks whether there is a match between the two lists. The first match will be selected.

Alternatively, the management agent may have its list of supported cipher algorithms sorted by their strength (robustness) and go through this list in descending order of strength to look for a match. This method will result in the strongest algorithm being selected. The strength of a cipher algorithm is basically determined by the length of the cipher key employed. For example, SSL_RSA_WITH_RC4_128_MD5, which uses a 128-bit key, is stronger (more robust) than SSL_RSA_EXPORT_WITH_RC4_40_MD5, which uses a 40-bit key. The preferred embodiment of the present invention uses, as examples of cipher algorithm, SSL_RSA_EXPORT_WITH_RC2_CBC_40_MD5 (which is weaker) and SSL_RSA_WITH_RC4_128_MD5 (which is stronger).

If there is no match between the management application' s list and the management agent's list, or if the management application does not support SSL, then ciphering will not take place.

Upon receiving a session ID from the management application, the management agent checks the sessions currently in progress for a match in ID. If it finds a session having the same ID, it chooses the cipher algorithm of that session to establish a secure communication path with the management application.

After step 2, the management agent sends to the management application, as necessary, its own electronic certificate (step 3: Server Certificate), its own public key (step 4 : Server Key Exchange), and a request for the management application' s certificate (step 5: Certificate Request), notifies the management application of the completion of transmission (step 6: Server Hello Done), and waits for a response from the management application.

Upon receiving "Server Hello Done," the management application sends its own electronic certificate if it has also received "Certificate Request" (step 7: Client Certificate). Then it sends a session key ciphered according to the public key cipher algorithm specified by the cipher algorithm sent with "Server Hello" (step 8: Client Key Exchange). This session key will be used to generate the secret key to be used in the common key cipher in later communication. The management application then sends a message for verifying the management application's certificate (step 9: Certificate Verify) if necessary, notifies the management agent that it is now ready to start ciphered communication using the secret key (step 10: Change Cipher Spec), and finally notifies the management agent of the end of transmission (step 11: Finished).

Upon receiving "Finished," the management agent notifies the management application that it is now ready to start ciphered communication (step 12: Change Cipher Spec), followed by a notification of the end of transmission (step 13: Finished). The ciphered communication path is thus established.

Once an SSL-ciphered communication path has been established, the management application running on the management computer 300 sends to the storage subsystem 400 a processing request for the management agent as an XML message, using HTTP Post Request. This XML message contains a command for the storage subsystem 400, which is to be executed by the management agent running on the processor 510b, as will be explained later.

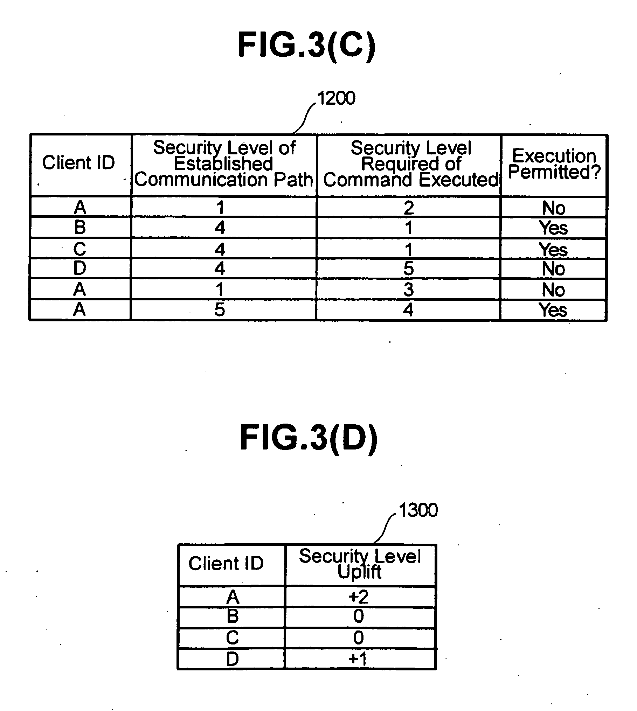

Figure 3 shows an example of the layout and contents of four tables (A through D): the security level specification table 1000 (A), the required security level table 1100 (B), the history table 1200 (C), and the security level uplift table 1300 (D), which are held in the shared memory 590 and are used by the management agent.

The security level specification table 1000 assigns a security level to the combination of the cipher algorithm used between the management application and the management agent and the authentication algorithm used by the management agent, and is referenced to determine the operational security level between the management application and the management agent.

In the security level specification table 1000, the "communication path cipher algorithm" means the cipher algorithm for the communication between the management application and the management agent that is determined in step 2: Server Hello. "HTTP" means that SSL-based cipher is not employed.

In the security level specification table 1000, the "authentication algorithm" refers to the system by which the management agent authenticates the management application. If the client certificate has been received and verified in step 7: Client Certificate during handshaking, "SSL" is entered here. If the client certificate has not been received or verified, a standard HTTP authentication algorithm specified by the Authentication header of the HTTP request message is applicable, which is either Basic based on the user ID and password or MD5Digest. Of the two, Basic, in which the password is sent unmodified over the communication path, is less secure because it can be stolen through wire-tapping or eavesdropping. MD5Digest, in which a hash value calculated from the password is sent instead of the password itself, is more secure because the password itself cannot be stolen. Regardless of the authentication algorithm employed, however, a communication path can be given a high security level if it is based on HTTPS, is ciphered, and is difficult to eavesdrop. In the example of the preferred embodiment described here, for the HTTP that is not ciphered, security level 1 is given to Basic, and security level 2 is given to MD5Digest.

When HTTPS (SSL_RSA_EXPORT_WITH_RC2_CBC_40_MD5) is used as the communication path, the same security level (level 3) is assigned to both Basic and MD5Digest. Also when HTTPS (SSL_RSA_WITH_RC4_128_MD5) is used, the same security level (level 4 in this case) is assigned to both Basic and MD5Digest. If SSL authentication is employed, however, higher security levels can be assigned: level 5, for example, when HTTPS (SSL_RSA_WITH_RC4_128_MD5) is used. With HTTPS (SSL_RSA_EXPORT_WITH_RC2_CBC_40_MD5), which does not have strong (robust) enough cipher capability, however, security level 3 is assigned even if SSL authentication is employed.

The required security level table 1100 lists all the commands that the management application may issue to the management agent, together with the security levels that are required for their execution. This table is referenced to obtain the security level required for the execution of a command received from the management application. The higher the security level, the stronger the cipher algorithm, that is, the safer the communication .

The security level required of a command, i.e., the security level that is required for the execution of a command, is determined by the possible impact the execution of the command can have on the storage subsystem 400 and the computer system 1. For example, for GetVolumeInfo, a command for obtaining information on the capacity and status of a device (volume) in the storage subsystem 400, the required security level can be low, since its execution would not have any impact on the storage subsystem 400. In contrast, the required security level for AssignVolume, a command for changing the settings of the storage subsystem 400, should be high, since it would allow the storage subsystem 400 to be accessed by the computer 200. Furthermore, the required security level for FormatVolume, a command for formatting or initializing a volume in the storage subsystem 400, should be still higher, since its execution would erase the entire contents of the designated volume, which are being used by the computer 200, thereby rendering the computer 200 inoperable and causing a significant impact on the computer system 1.

Whereas in the foregoing example of the present invention the required security level is determined by the impact the execution of the command may have on the system, alternatively it may be determined also by the importance of the information to be accessed. For example, if the information on the storage subsystem 400 is considered sensitive, then by making the required security level for the GetVolumeInfo command higher, it is possible to prevent unauthorized access to it.

The history table 1200 records the history of commands issued from the management application to the management agent and has basically four entries per line: the client ID, which is used for authentication by the management application issuing the command, the security level of the communication path established between the management application and the management agent, the security level required of the command executed, and whether the execution has been permitted.

The security level uplift table 1300 registers the uplift in security level that is to be added to the security level required of the command depending on whether the execution has been permitted (shown in the fourth column in the history table). The uplift value is increased when the command has not been executed because the security level of the communication path was lower than the security level required of the command.

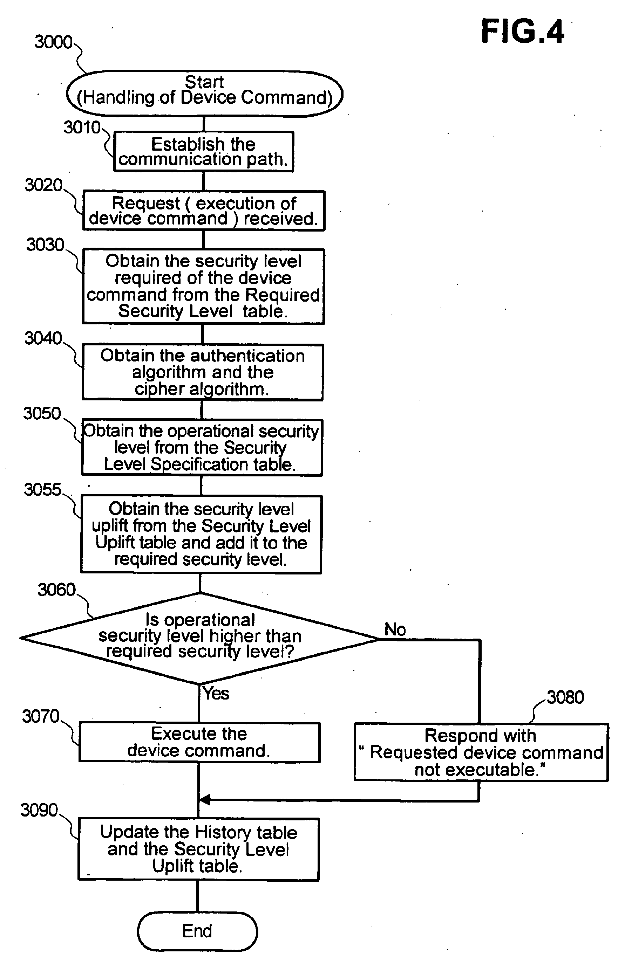

Figure 4 illustrates how the management agent handles a command issued by the management application. First, the management agent establishes a ciphered communication path using the SSL handshaking protocol described earlier (step 3010). Upon receiving a command from the management application (step 3020), the management agent obtains the security level required for executing it from the required security level table 1100 (step 3030).

It then obtains the cipher algorithm and the authentication algorithm used in receiving the command (step 3040). The cipher algorithm obtained here is actually the one selected and sent to the management application in step 2: Server Hello of SSL handshaking. If SSL is not used, then this is HTTP.

The authentication algorithm obtained here is actually the one with which the management application has been authenticated: It is either SSL (if the management application (SSL client) has been authenticated in step 7: Client Certificate of SSL handshaking) or is taken from the Authentication header of the HTTP request message received in step 3020 (otherwise).

Next, using the cipher algorithm and the authentication algorithm obtained in step 3040, it obtains the security level (operational security level) from the security specification table 1000 (step 3050).

It then obtains the security level uplift value from the security level uplift table 1300 using the client ID of the management application and adds it to the required security level obtained in step 3030 (step 3055).

It then compares the uplifted required security level (security level required by the client) and the operational security level obtained in step 3050 (step 3060), and if the latter is greater than or equal to the former, executes the command (step 3070); otherwise, it notifies the management application that the command cannot be executed (step 3080).

In any case, it then registers into the history table 1200 the client ID, and the security level of the communication path, the required security level, and whether the execution of the command has been permitted. If the execution of the command has been rejected, then it increases the uplift value for this client (management application) in the security level uplift table 1300 (step 3090).

Commands can be targeted at a variety of devices, including the storage subsystem 400, the computer 200, and the fiber channel switch 50. The targeted device stores the security specification table and the required security level table (as shown in Figure 3) in its memory, and determines whether or not to execute the command depending on the result of the comparison between the security level of the communication path and the security level required of the command.

Whereas the preferred embodiment discussed here may appear to assume that the management application resides in the management computer 300 and that only the management computer 300 issues commands to devices, alternative implementations can be envisaged. For example, each of the devices such as the management computer 300, the computer 200, the fiber channel switch 50, and the storage subsystem 400 has a control unit which issues commands for managing other devices, an interface unit which sends such commands to other devices, and a memory which stores a table indicating the security levels of the communication paths and a table defining the security levels required of commands for other devices. In such a configuration, the control unit of each such device can determine whether or not to issue or send a command, based on the result of the comparison between the security level of the communication path and the security level required of such command.

Alternatively, an arrangement can be made such that the management agent running on the computer 200 is capable of executing control commands on a piece of software such as a database application running on the computer 200 and determines the executability of commands on such piece of software issued by the management application, depending on the security level of the communication path, in the same way as the management agent does for an ordinary device.

According to the present invention, it is possible to maintain the security of a computer system by preventing a malicious and unauthorized intruder from executing potent commands that can cause a significant disruption or down of it, without unreasonably limiting the use of the management application by the system administrator.

## Claims

1. A computer system comprising:
a computer (200a, 200b) comprising a first interface unit and a first control unit;
a storage system (400) comprising a logical volume for storing data used by the computer (200a, 200b); and
a management computer (300) comprising a second control unit adapted to issue commands for managing the computer (200a, 200b) and a second interface unit (304) adapted to send the commands to the computer (200a, 200b);
wherein the first interface unit is adapted to receive the commands from the management computer (300) and the first control unit is adapted to determine whether to execute the commands,
wherein the computer (200a, 200b) further comprises a first memory coupled to the first control unit, wherein
the first memory having stored therein a first table (1000) pre-registering the security levels of a communication path (70) between the management computer (300) and the computer (200a, 200b), and a second table (1100) pre-registering security levels required for the execution of commands that the management computer (300) requests the computer (200a, 200b) to execute; and
the first control unit is adapted
to obtain, for each command sent from the management computer (300) to the computer (200a, 200b), an operational security level for the command by referencing the first table (1000),
to obtain, for each command sent from the management computer (300) to the computer (200a, 200b), a required security level by referencing the second table (1100),
to compare the operational security level and the required security level, and
to determine whether to execute the command based on the result of the comparison.

2. The computer system of claim 1, wherein the security level required for the execution of a command is the type of the command.

3. The computer system of claim 2, wherein the security level of the communication path (70) is to be determined by the kind of cipher algorithm selected in establishing the communication path (70) between the management computer (300) and the computer (200a, 200b).

4. The computer system of claim 2, wherein the security level, of the communication path (70) is to be determined by the strength or robustness of the cipher algorithm selected in establishing the communication path (70) between the management computer (300) and the computer (200a, 200b).

5. The computer system of claim 3, wherein the security level of the communication path (70) is to be determined by the key length of the cipher algorithm selected in establishing the communication path (70) between the management computer (300) and the computer (200a, 200b).

6. The computer system of claim 3, wherein the first table (1000) is adapted to list the cipher algorithms and the authentication algorithms used on the communication path (70) between the management computer (300) and the computer (200a, 200b), together with the security level assigned to each combination of cipher and authentication algorithms.

7. The computer system of claim 1, wherein the second table (1100) is adapted to list the commands defined between the management computer (300) and the computer (200a, 200b) together with the security level required for the execution of each of the commands.

8. The computer system of claim 1, wherein the first control unit, when the comparison indicates that the operational security level is greater than or equal to the required security level, is adapted to execute the command.

9. The computer system of claim 2, wherein a security level required for the execution of a command received by the storage system (400) from the management computer (300) is determined by a kind of data contained in a storage area that is subject to the operation based on the command.

10. The computer system of claim 1, wherein
the storage system (400) further comprises a string of hard disk drives and includes one or more logical volumes, each logical volume corresponding to a part of or the whole physical storage area made up of the string of hard disk drives, wherein each logical volume corresponds to a storage area accessible by the computer and
a third control unit coupled to the string of hard disk drives for an access to the logical volume from the computer (200a, 200b) for using the data; and
the third control unit is adapted to receive commands from the management computer (300) and to determine whether to permit the execution of the commands against a part of or the whole storage area of the storage system, based on a type of a communication path (70) between the management computer (300) and the storage system (400) and also on a type of the commands.

11. The computer system of claim 10, wherein
the storage system (400) further comprises a second memory coupled to the third control unit, the second memory having stored therein a third table (1200) pre-registering security levels of a communication path (70) between the management computer (300) and the storage system (400) and a fourth table (1300) pre-registering security levels required for the execution of commands that the management computer (300) requests the storage system (400) to execute;
the third control unit is adapted to obtain, for each command sent from the management computer (300) to the storage system (400), an operational security level for the command by referencing the third table (1200),
to obtain, for each command sent from the management computer (300) to the storage system (400), a required security level by referencing the fourth table (1300),
to compare the operational security level of the third table (1200) and the required security level of the fourth table (1300), and
to determine whether to permit the execution of the command based on the result of the comparison.

12. The computer system of claim 10 and 11, wherein the security level required for the execution of a command, sent from the management computer (300) to the storage system (400), is also determined by the importance of the information to be accessed in an operation based on the command.

13. The computer system of claim 12, wherein a higher security level for execution is to be assigned to commands, sent from the management computer (300) to the storage system (400), to format or initialize a logical volume.

14. A method for managing a request for a computer (200a, 200b) the computer using data in a logical volume of a storage system (400), the method comprising:
receiving commands for managing the computer from a management computer (300) by a first interface unit in the computer;
determining by a first control unit in the computer whether to execute the commands, by:
storing in a first memory in the computer a first table (1000) pre-registering security levels of a communication path (70) between the management computer (300) and the computer (200a, 200b) and a second table (1100) pre-registering security levels required for the execution of commands that the management computer (300) requests the computer (200a, 200b) to execute,
obtaining, by the first control unit, for each command sent from the management computer (300) to the computer (200a, 200b), an operational security level for the command by referencing the first table (1000);
obtaining, by the first control unit, for each command sent form the management computer (300) to the computer (200a, 200b), a required security level by referencing the second table (1100);
comparing, by the first control unit, the operational security level and the required security level; and
determining by the first control unit whether to execute the command based on the result of the comparison.

## Patentansprüche

1. Computersystem, umfassend:
einen Computer (200a, 200b) mit einer ersten Schnittstelleneinheit und einer ersten Steuereinheit;
ein Speichersystem (400) mit einem logischen Volume zum Speichern von vom Computer (200a, 200b) verwendeten Daten; und
einen Verwaltungscomputer (300) mit einer zum Ausgeben von Anweisungen zum Verwalten des Computers (200a, 200b) ausgelegten zweiten Steuereinheit und einer zum Absenden der Anweisungen an den Computer (200a, 200b) ausgelegten zweiten Schnittstelleneinheit (304);
wobei die erste Schnittstelleneinheit dazu ausgelegt ist, die Anweisungen vom Verwaltungscomputer (300) zu empfangen, und die erste Steuereinheit dazu ausgelegt ist, zu bestimmen, ob die Anweisungen auszuführen sind,
wobei der Computer (200a, 200b) ferner einen mit der ersten Steuereinheit verbundenen ersten Speicher umfaßt, wobei
der erste Speicher eine darin gespeicherte erste Tabelle (1000), die die Sicherheitsstufen eines Kommunikationspfads (70) zwischen dem Verwaltungscomputer (300) und dem Computer (200a, 200b) vorregistriert, und eine zweite Tabelle (1100), die die Sicherheitsstufen vorregistriert, die für die Ausführung von Anweisungen, deren Ausführung durch den Computer (200a, 200b) vom Verwaltungscomputer (300) angefordert wird, erforderlich sind, aufweist; und
die erste Steuereinheit dazu ausgelegt ist,
für jede vom Verwaltungscomputer (300) an den Computer (200a, 200b) abgesendete Anweisung die Betriebssicherheitsstufe für die Anweisung durch Bezugnehmen auf die erste Tabelle (1000) zu erhalten,
für jede vom Verwaltungscomputer (300) an den Computer (200a, 200b) abgesendete Anweisung eine erforderliche Sicherheitsstufe durch Bezugnehmen auf die zweite Tabelle (1100) zu erhalten,
die Betriebssicherheitsstufe und die erforderliche Sicherheitsstufe zu vergleichen, und
auf der Grundlage des Ergebnisses des Vergleichs zu bestimmen, ob die Anweisung auszuführen ist.

2. Computersystem nach Anspruch 1, wobei die für die Ausführung einer Anweisung erforderliche Sicherheitsstufe die Art der Anweisung ist.

3. Computersystem nach Anspruch 2, wobei die Sicherheitsstufe des Kommunikationspfads (70) mittels der Art des Verschlüsselungsalgorithmus, der beim Einrichten des Kommunikationspfads (70) zwischen dem Verwaltungscomputer (300) und dem Computer (200a, 200b) ausgewählt worden ist, zu bestimmen ist.

4. Computersystem nach Anspruch 2, wobei die Sicherheitsstufe des Kommunikationspfads (70) mittels der Stärke oder Robustheit des Verschlüsselungsalgorithmus, der beim Einrichten des Kommunikationspfads (70) zwischen dem Verwaltungscomputer (300) und dem Computer (200a, 200b) ausgewählt worden ist, zu bestimmen ist.

5. Computersystem nach Anspruch 3, wobei die Sicherheitsstufe des Kommunikationspfads (70) mittels der Schlüssellänge des Verschlüsselungsalgorithmus, der beim Einrichten des Kommunikationspfads (70) zwischen dem Verwaltungscomputer (300) und dem Computer (200a, 200b) ausgewählt worden ist, zu bestimmen ist.

6. Computersystem nach Anspruch 3, wobei die erste Tabelle (1000) dazu ausgelegt ist, die Verschlüsselungsalgorithmen und die Authentifizierungsalgorithmen, die auf dem Kommunikationspfad (70) zwischen dem Verwaltungscomputer (300) und dem Computer (200a, 200b) verwendet werden, zusammen mit der jeder Kombination von Verschlüsselungs- und Authentifizierungsalgorithmen zugeschriebenen Sicherheitsstufe aufzuführen.

7. Computersystem nach Anspruch 1, wobei die zweite Tabelle (1100) dazu ausgelegt ist, die zwischen dem Verwaltungscomputer (300) und dem Computer (200a, 200b) definierten Anweisungen zusammen mit der für die Ausführung jeder der Anweisung erforderlichen Sicherheitsstufe aufzuführen.

8. Computersystem nach Anspruch 1, wobei die erste Steuereinheit dazu ausgelegt ist, die Anweisung auszuführen, wenn sich aus dem Vergleich ergibt, daß die Betriebssicherheitsstufe größer oder gleich der erforderlichen Sicherheitsstufe ist.

9. Computersystem nach Anspruch 2, wobei eine Sicherheitsstufe, die für die Ausführung einer Anweisung, die durch das Speichersystem (400) vom Verwaltungscomputer (300) empfangen worden ist, erforderlich ist, durch eine Art von Daten bestimmt wird, die in einem Speicherbereich enthalten sind, der Gegenstand des auf der Anweisung beruhenden Vorgangs ist.

10. Computersystem nach Anspruch 1, wobei
das Speichersystem (400) ferner eine Reihe von Festplattenlaufwerken umfaßt und eines oder mehrere logische Volumes aufweist, wobei jedes logische Volume dem gesamten von der Reihe der Festplattenlaufwerke gestellten physikalischen Speicherbereich oder einem Teil davon entspricht, wobei jedes logische Volume einem vom Computer aus zugreifbaren Speicherbereich entspricht, und
eine mit der Reihe der Festplattenlaufwerke verbundene dritte Steuereinheit für einen Zugriff auf das logische Volume vom Computer (200a, 200b) aus zum Verwenden der Daten; und
die dritte Steuereinheit dazu ausgelegt ist, Anweisungen vom Verwaltungscomputer (300) zu empfangen und auf der Grundlage einer Art eines Kommunikationspfads (70) zwischen dem Verwaltungscomputer (300) und dem Speichersystem (400) und ebenfalls einer Art der Anweisungen zu bestimmen, ob die Ausführung der Anweisungen gegen den gesamten Speicherbereich des Speichersystems oder einen Teil davon zu erlauben ist.

11. Computersystem nach Anspruch 10, wobei
das Speichersystem (400) ferner einen mit der dritten Speichereinheit verbundenen zweiten Speicher umfaßt, wobei der zweite Speicher eine darin gespeicherte dritte Tabelle (1200), die Sicherheitsstufen eines Kommunikationspfads (70) zwischen dem Verwaltungscomputer (300) und dem Speichersystem (400) vorregistriert, und eine vierte Tabelle (1300), die Sicherheitsstufen vorregistriert, die für die Ausführung von Anweisungen, deren Ausführung der Verwaltungscomputer (300) vom Speichersystem (400) auffordert, erforderlich sind, aufweist;
die dritte Steuereinheit dazu ausgelegt ist, für jede vom Verwaltungscomputer (300) an das Speichersystem (400) abgesendete Anweisung eine Betriebssicherheitsstufe für die Anweisung durch Bezugnehmen auf die dritte Tabelle (1200) zu erhalten,
für jede vom Verwaltungscomputer (300) an das Speichersystem (400) abgesendete Anweisung eine erforderliche Sicherheitsstufe durch Bezugnehmen auf die vierte Tabelle (1300) zu erhalten,
die Betriebssicherheitsstufe der dritten Tabelle (1200) und die erforderliche Sicherheitsstufe der vierten Tabelle (1300) zu vergleichen, und
auf der Grundlage des Ergebnisses des Vergleichs zu bestimmen, ob die Ausführung der Anweisung zu erlauben ist.

12. Computersystem nach Anspruch 10 und 11, wobei die Sicherheitsstufe, die für die Ausführung einer Anweisung, die vom Verwaltungscomputer (300) an das Speichersystem (400) abgesendet worden ist, erforderlich ist, auch durch die Wichtigkeit der Informationen, auf die bei einem auf der Anweisung basierenden Vorgang zugegriffen werden soll, bestimmt wird.

13. Computersystem nach Anspruch 12, wobei eine höhere Sicherheitsstufe für die Ausführung vom Verwaltungscomputer (300) an das Speichersystem (400) abgesendeten Anweisungen zum Formatieren oder Initialisieren eines logischen Volumes zugeschrieben werden soll.

14. Verfahren zum Verwalten einer Anforderung für einen Computer (200a, 200b), wobei der Computer Daten in einem logischen Volume eines Speichersystems (400) verwendet, wobei das Verfahren umfaßt:
Empfangen von Anweisungen zum Verwalten des Computers von einem Verwaltungscomputer (300) über eine erste Schnittstelleneinheit im Computer;
Bestimmen, durch eine erste Steuereinheit im Computer, ob die Anweisungen auszuführen sind, indem:
in einem ersten Speicher im Computer eine erste Tabelle (1000), die Sicherheitsstufen eines Kommunikationspfads (70) zwischen dem Verwaltungscomputer (300) und dem Computer (200a, 200b) vorregistriert, und eine zweite Tabelle (1100), die Sicherheitsstufen vorregistriert, die für die Ausführung von Anweisungen, deren Ausführung durch den Computer (200a, 200b) vom Verwaltungscomputer (300) angefordert wird, erforderlich sind, gespeichert werden,
durch die erste Steuereinheit für jede vom Verwaltungscomputer (300) an den Computer (200a, 200b) abgesendete Anweisung eine Betriebssicherheitsstufe für die Anweisung durch Bezugnehmen auf die erste Tabelle (1000) erhalten wird;
durch die erste Steuereinheit für jede vom Verwaltungscomputer (300) an den Computer (200a, 200b) abgesendete Anweisung eine erforderliche Sicherheitsstufe durch Bezugnehmen auf die zweite Tabelle (1100) erhalten wird;
durch die erste Steuereinheit die Betriebssicherheitsstufe und die erforderliche Sicherheitsstufe verglichen werden; und
durch die erste Steuereinheit auf der Grundlage des Ergebnisses des Vergleichs bestimmt wird, ob die Anweisung auszuführen ist.

## Revendications

1. Système informatique comportant :
un ordinateur (200a, 200b) comportant une première unité d'interface et une première unité de commande,
un système de mémorisation (400) comportant un volume logique pour mémoriser des données utilisées par l'ordinateur (200a, 200b), et
un ordinateur de gestion (300) comportant une deuxième unité de commande adaptée pour émettre des instructions afin de gérer l'ordinateur (200a, 200b) et une seconde unité d'interface (304) adaptée pour envoyer les instructions à l'ordinateur (200a, 200b),
dans lequel la première unité d'interface est adaptée pour recevoir les instructions en provenance de l'ordinateur de gestion (300) et la première unité de commande est adaptée pour déterminer s'il faut exécuter les instructions,
dans lequel l'ordinateur (200a, 200b) comporte en outre une première mémoire couplée à la première unité de commande, dans lequel
la première mémoire dans laquelle est mémorisé un premier tableau (1000) préenregistrant les niveaux de sécurité d'un trajet de communication (70) entre l'ordinateur de gestion (300) et l'ordinateur (200a, 200b), et un deuxième tableau (1100) préenregistrant des niveaux de sécurité requis pour l'exécution d'instructions que l'ordinateur de gestion (300) demande à l'ordinateur (200a, 200b) d'exécuter, et
la première unité de commande est adaptée
pour obtenir, pour chaque instruction envoyée par l'ordinateur de gestion (300) à l'ordinateur (200a, 200b), un niveau de sécurité opérationnel pour l'instruction en se reportant au premier tableau (1000),
pour obtenir, pour chaque instruction envoyée par l'ordinateur de gestion (300) à l'ordinateur (200a, 200b), un niveau de sécurité requis en se reportant au deuxième tableau (1100),
pour comparer le niveau de sécurité opérationnel et le niveau de sécurité requis, et
pour déterminer s'il faut exécuter l'instruction sur la base du résultat de la comparaison.

2. Système informatique selon la revendication 1, dans lequel le niveau de sécurité requis pour l'exécution d'une instruction est le type de l'instruction.

3. Système informatique selon la revendication 2, dans lequel le niveau de sécurité du trajet de communication (70) doit être déterminé par le type d'algorithme de chiffrement sélectionné pour établir le trajet de communication (70) entre l'ordinateur de gestion (300) et l'ordinateur (200a, 200b).

4. Système informatique selon la revendication 2, dans lequel le niveau de sécurité du trajet de communication (70) doit être déterminé par la résistance ou la robustesse de l'algorithme de chiffrement sélectionné pour établir le trajet de communication (70) entre l'ordinateur de gestion (300) et l'ordinateur (200a, 200b).

5. Système informatique selon la revendication 3, dans lequel le niveau de sécurité du trajet de communication (70) doit être déterminé par la longueur de clé de l'algorithme de chiffrement sélectionné pour établir le trajet de communication (70) entre l'ordinateur de gestion (300) et l'ordinateur (200a, 200b).

6. Système informatique selon la revendication 3, dans lequel le premier tableau (1000) est adapté pour dresser la liste des algorithmes de chiffrement et des algorithmes d'authentification utilisés sur le trajet de communication (70) entre l'ordinateur de gestion (300) et l'ordinateur (200a, 200b), conjointement avec le niveau de sécurité attribué à chaque combinaison d'algorithmes de chiffrement et d'authentification.

7. Système informatique selon la revendication 1, dans lequel le deuxième tableau (1100) est adapté pour dresser la liste des instructions définies entre l'ordinateur de gestion (300) et l'ordinateur (200a, 200b) conjointement avec le niveau de sécurité requis pour l'exécution de chacune des instructions.

8. Système informatique selon la revendication 1, dans lequel la première unité de commande, lorsque la comparaison indique que le niveau de sécurité opérationnel est supérieur ou égal au niveau de sécurité requis, est adaptée pour exécuter l'instruction.

9. Système informatique selon la revendication 2, dans lequel un niveau de sécurité requis pour l'exécution d'une instruction reçue par le système de mémorisation (400) en provenance de l'ordinateur de gestion (300) est déterminé par un type de données contenues dans une zone de mémorisation qui est soumise à l'opération basée sur l'instruction.

10. Système informatique selon la revendication 1, dans lequel :
le système de mémorisation (400) comporte en outre une série de lecteurs de disques durs et inclut un ou plusieurs volumes logiques, chaque volume logique correspondant à une partie ou à la totalité de la zone de mémorisation physique constituée de la série de lecteurs de disques durs, chaque volume logique correspondant à une zone de mémorisation accessible par l'ordinateur, et
une troisième unité de commande couplée à la série de lecteurs de disques durs pour un accès au volume logique depuis l'ordinateur (200a, 200b) en vue d'utiliser les données, et
la troisième unité de commande est adaptée pour recevoir des instructions en provenance de l'ordinateur de gestion (300) et pour déterminer s'il faut autoriser l'exécution des instructions sur une partie ou la totalité de la zone de mémorisation du système de mémorisation, sur la base d'un type d'un trajet de communication (70) entre l'ordinateur de gestion (300) et le système de mémorisation (400) et également sur la base d'un type des instructions.

11. Système informatique selon la revendication 10, dans lequel
le système de mémorisation (400) comporte en outre une seconde mémoire couplée à la troisième unité de commande, la seconde mémoire dans laquelle est mémorisé un troisième tableau (1200) préenregistrant des niveaux de sécurité du trajet de communication (70) entre l'ordinateur de gestion (300) et le système de mémorisation (400) et un quatrième tableau (1300) préenregistrant des niveaux de sécurité requis pour l'exécution d'instructions que l'ordinateur de gestion (300) demande au système de mémorisation (400) d'exécuter,
la troisième unité de commande est adaptée pour obtenir, pour chaque instruction envoyée par l'ordinateur de gestion (300) au système de mémorisation (400), un niveau de sécurité opérationnel pour l'instruction en se reportant troisième tableau (1200),
pour obtenir, pour chaque instruction envoyée par l'ordinateur de gestion (300) au système de mémorisation (400), un niveau de sécurité requis en se reportant au quatrième tableau (1300),
pour comparer le niveau de sécurité opérationnel du troisième tableau (1200) et le niveau de sécurité requis du quatrième tableau (1300), et
pour déterminer s'il faut autoriser l'exécution de l'instruction sur la base du résultat de la comparaison.

12. Système informatique selon les revendications 10 et 11, dans lequel le niveau de sécurité requis pour l'exécution d'une instruction, envoyée par l'ordinateur de gestion (300) au système de mémorisation (400) est également déterminé par l'importance des informations devant faire l'objet d'un accès lors d'une opération basée sur l'instruction.

13. Système informatique selon la revendication 12, dans lequel un niveau de sécurité plus élevé pour l'exécution doit être attribué aux instructions, envoyées par l'ordinateur de gestion (300) au système de mémorisation (400), pour formater ou initialiser un volume logiques.

14. Procédé pour gérer une demande pour un ordinateur (200a, 200b), l'ordinateur utilisant des données dans un volume logique d'un système de mémorisation (400), le procédé comportant les étapes consistant à :
recevoir des instructions pour gérer l'ordinateur en provenance d'un ordinateur de gestion (300) par l'intermédiaire d'une première unité d'interface dans l'ordinateur,
déterminer par l'intermédiaire d'une première unité de commande dans l'ordinateur s'il faut exécuter les instructions :
en mémorisant dans une première mémoire de l'ordinateur un premier tableau (1000) préenregistrant des niveaux de sécurité d'un trajet de communication (70) entre l'ordinateur de gestion (300) et l'ordinateur (200a, 200b) et un deuxième tableau (1100) préenregistrant des niveaux de sécurité requis pour l'exécution d'instructions que l'ordinateur de gestion (300) demande à l'ordinateur (200a, 200b) d'exécuter,
en obtenant, par l'intermédiaire de la première unité de commande, pour chaque instruction envoyée par l'ordinateur de gestion (300) à l'ordinateur (200a, 200b), un niveau de sécurité opérationnel pour l'instruction en se reportant au premier tableau (1000),
en obtenant, par l'intermédiaire de la première unité de commande, pour chaque instruction envoyée par l'ordinateur de gestion (300) à l'ordinateur (200a, 200b), un niveau de sécurité requis en se reportant au deuxième tableau (1100),
en comparant, par l'intermédiaire de la première unité de commande, le niveau de sécurité opérationnel et le niveau de sécurité requis, et
en déterminant par l'intermédiaire de la première unité de commande s'il faut exécuter l'instruction sur la base du résultat de la comparaison.
